# EUROPEAN PATENT APPLICATION

(11) **EP 1 220 134 A1**
(43) Date of publication of application: **03.07.2002**
(21) Application number: 01961256.3
(22) Date of filing: 31.08.2001
(51) Int. Cl.: G06F 17/60

(54) **GOODS SALES METHOD AND GOODS SALES APPARATUS**

(30) Priority: 31.08.2000 JP 2000264698
(71) Applicant: NTT DoCoMo, Inc., Tokyo 100-6150 (JP)
(72) Inventor: NAGAOKA, Tatsuji, Sapporo-shi, Hokkaido 002-8072 (JP); NOMURA, Kazuo, Ota-ku, Tokyo 146-0083 (JP); HIRUMA, Yutaka, Nerima-ku, Tokyo 176-0001 (JP)
(74) Representative: HOFFMANN EITLE
(86) International application number: JP0107540
(87) International publication number: WO0219194

(57) **Abstract**

A sale notice system wherein goods are sold by a sale notice device (3) based on a purchase request transmitted from a portable communication terminal (2A), and a sale notice device (3) transmits information corresponding to the purchase request, to a portable communication terminal (2B). When the sale notice device (3) receives the purchase request from the portable communication terminal (2A), the sale notice device (3) accesses a member database (31) to obtain settlement information of a user. And, the sale notice device (3) access goods database (32) to decide a purchase price, and transmits a settlement request, including the above information and price, to a settlement organization device (41) in a settlement organization (4). In the case that the settlement request is approved and the settlement is completed at the settlement organization (4), the sale notice device (3) transmits a delivery announcement notice to the portable communication terminal (2B) which a person at a place of delivery owns.

## Description

### Technical Field

The present invention relates to a method and device for sale and delivery of goods, and more particularly to the on-line sale of goods and their delivery.

### Background Art

Recently, on-line sales via a communication network have been increasing. Goods sold on-line are subsequently delivered to an appointed place of delivery. A place of delivery is usually appointed by a purchaser of the goods voluntarily, and the purchaser can receive the goods at home or at work. Recently, in Japan, a service has been introduced whereby goods bought on-line are delivered to an appointed convenience store (or drag store ) to be collected by the purchaser.

However, it is assumed that the place of delivery for goods purchased on-line is to an address of a third person. And, when the goods are presented or forwarded to the third person, there has been a problem in the conventional art that a service acceptable to customers has not been provided.

In the conventional art, a sender of goods is usually a company which provides on-line sales services. Thus, a recipient must await receipt of goods from a company with which they may not be familiar; with the result that there is likely to be some anxiety while waiting for the goods to be delivered. If a purchaser calls a recipient after purchasing the goods, and informs the recipient that the goods are being delivered, the recipient will be reassured. However, this is a time-consuming process. Also, if the purchaser is not familiar with buying goods on-line , the purchaser may fail to follow the correct procedure for the purchase of the goods, and may call the recipient without realizing that the transaction has failed. In this case, the recipient will be waiting for the goods which are not delivered based on the communication with the purchaser.

### Disclosure of Invention

The purpose of the present invention is to provide a method and a device for the sale and delivery of goods able to provide a proper service without causing inconvenience to purchasers and recipients.

To achieve the above purpose, the present invention provides a method for the sale and delivery of goods comprising a step of receiving a purchase request transmitted from a first communication terminal for specifying a user, and a step of selling goods on the basis of the purchase request, and transmitting the information, corresponding to the purchase request, to a second communication terminal for specifying a user.

Also, according to the method of the present invention for the sale and delivery of goods, the second communication terminal may be a communication terminal corresponding to a place of delivery for the goods.

Further, when the second communication terminal is a communication terminal for a place of delivery for the goods, information corresponding to the purchase request may include goods information. This information may also be the one for stating where the goods information is.

Also, when the second communication terminal is a communication terminal corresponding to a place of delivery for the purchase request, the information corresponding to the purchase request may include information showing a user of the first communication terminal. Further, the information for showing the user, may be a telephone number for the first communication terminal, and the first communication terminal and second communication terminal may comprise a function whereby users of each communication terminal are able to communicate with each other.

Also, when the second communication terminal is a communication terminal corresponding to a place of delivery for goods, information corresponding to the purchase request may include delivery information for confirmation of the goods, and the second communication terminal may transmit the delivery information for confirmation to the first communication terminal after delivering the goods.

Also, when the second communication terminal is a communication terminal corresponding to a place of delivery for goods, information corresponding to a purchase request may include a delivery date for the goods, or, delivery information for the goods may be notified to the first communication terminal.

Also, as described in the embodiments, a communication terminal may be a portable communication terminal.

To achieve this purpose, the present invention provides a device for the sale and delivery of goods, comprising a means for receiving a purchase request transmitted from a first communication terminal to specify a user, a means for selling goods based on the purchase request, and a means for transmitting the information corresponding to the purchase request, to a second communication terminal to specify a user.

According to the method and the device for the sale and delivery of goods provided by the present invention, the information corresponding to the sale is transmitted to a second communication terminal in the sale of the goods to a user of a first communication terminal. Accordingly, a user of the second communication terminal is able to use the information, therefore, a proper service is provided at least to either one of a purchaser or a recipient of goods .

### Brief Description of the Drawings

Fig. 1 is a diagram illustrating an example of a configuration about the logistics in a sale notice system to which a method for the sale and delivery of goods is applied by one of the embodiments in present invention.
Fig. 2 is a diagram illustrating an example of a configuration about the communication in this system.
Fig. 3 is a diagram illustrating an another example of a configuration about the communication in this system.
Fig. 4 is a diagram illustrating an another example of a configuration about the communication in this system.
Fig. 5 is a flowchart illustrating the flow of a sale transaction which sale notice device 3 performs in this system.
Fig. 6 is a diagram explaining the operation in this system.
Fig. 7 is a sequence diagram explaining an example of operation in this system.
Fig. 8 is a sequence diagram explaining an example of operation in this system.
Fig. 9 is a sequence diagram explaining an example of operation in this system.

### Best Mode for Carrying Out the Invention

Embodiments of the present invention will be described with reference to the drawings. Like numerals denote like elements in the figures.

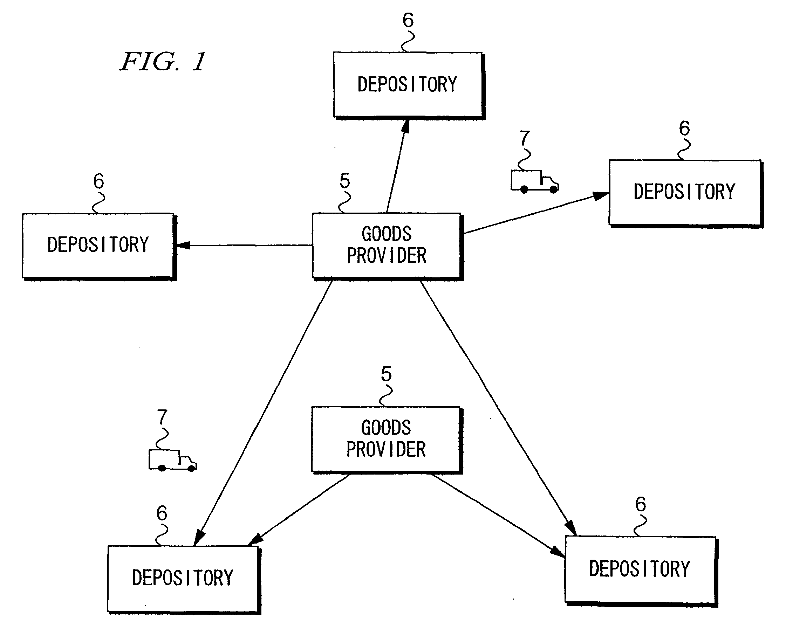

Fig. 1 is a diagram illustrating an example of a configuration about the logistics in a sale notice system to which a method for the sale and delivery of goods is applied by the one of the embodiments in the present invention. In this figure, the goods provider 5 is an organization which has the goods of a maker and so forth. There are two sale of goods companies 5 in fig 1, but in reality the number of the goods providers in the present system may also be only one, or three or more.

A Depository 6 is a place to provide a service which takes charge of goods which have been delivered to a place of delivery from the goods sale company 5 temporarily, and provides the goods to a person at a place of delivery when the person visits. A station or a convenience store is well-known as a place providing this kind of service in Japan. In general, multiple depositories 6 should be located to be accessible across a wide area, as delivery points will also be located across a wide area. In fig. 1, for the sake of simplicity, five depositories are shown. However, the number of depositories may be more than five.

A Vehicle 7 is a vehicle to transport goods to the depository 6 from the goods provider 5. It is optional to transport the goods directly to the depository 6 from the goods provider 5, or to another depository 6 by way of depository 6. Also, whether the vehicle 7 belongs to the goods provider 5 or to other organizations (E.g. : A logistics company) is optional as well.

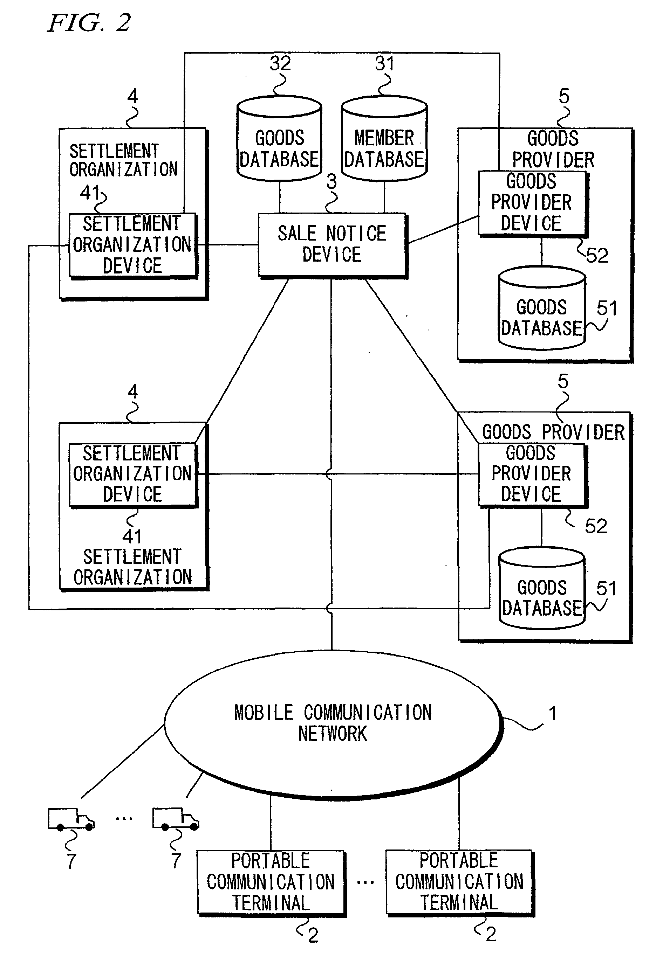

Fig. 2 is a diagram illustrating an example of a configuration about the communication in this system. In this figure, a mobile communication network 1 provides a communication service to mobiles.

A Portable communication terminal 2 is a portable communication device which is able to use a communication service provided by the mobile communication network 1. For example, the portable communication terminal 2 may be a portable telephone, or a portable computer which comprises a communicative function (E.g.: PDA (Personal Data Assistance) or Handheld PC), or the portable telephone in this figure, or a portable computer connected to the portable telephone. Also, the portable communication terminal 2 memorizes personal information (For example, a telephone number of a user's computer) to specify the correct user.

A Sale notice device 3 comprises a general computer system, which is connected to mobile communication network 1 by which communication can take place by way of a leased line. The sale notice device 3 is possible to access a member database 31 and a goods database 32; and only accepts an access from the portable communication terminal 2 of a member who is registered with the member database 31, and transmits goods information stored in the goods database 32 to the portable communication terminal 2, and provides an on-line sale service to the member.

A Member database 31 stores identification information of a member (E.g. : Name), a telephone number for the portable communication terminal 2 owned by the member, and settlement information corresponding to the member (E.g.: credit card number). Also, a goods database 32 stores goods information to introduce goods which can be bought and sold in this system, and necessary information (E.g.: the information to specify a settlement organization which is available to use) to sell and buy the goods.

A Settlement organization 4 is a settlement organization for banks or credit card companies. There are two settlement organizations 4 in this figure, but in reality the number of settlement organizations 4 in this system may also be only one, or three or more. Also, the settlement organization 4 comprises a settlement organization device 41 configured by a general computer system. Each settlement organization device 41 in this figure is connected to the sale notice device 3 by which communication can take place by a leased line.

A goods provider 5 comprises a goods database 51 storing goods information with which a company deals, and the goods provider device 52 which can access the goods database 51. The goods provider device 52 is configured by a general computer system, and connected to the sale notice device 3 by which communication can take place by a leased line. Also, the goods provider device 52 is connected to the settlement organization device 41 in the settlement organization 4 which is available to use when the company goods are sold. Also, the goods database 32 in the sale notice device 3 is updated in real-time based on the goods database 51. This kind of an updating system is performed by well-known art.

Also, a Vehicle 7 can receive a communication service provided by the mobile communication terminal 1.

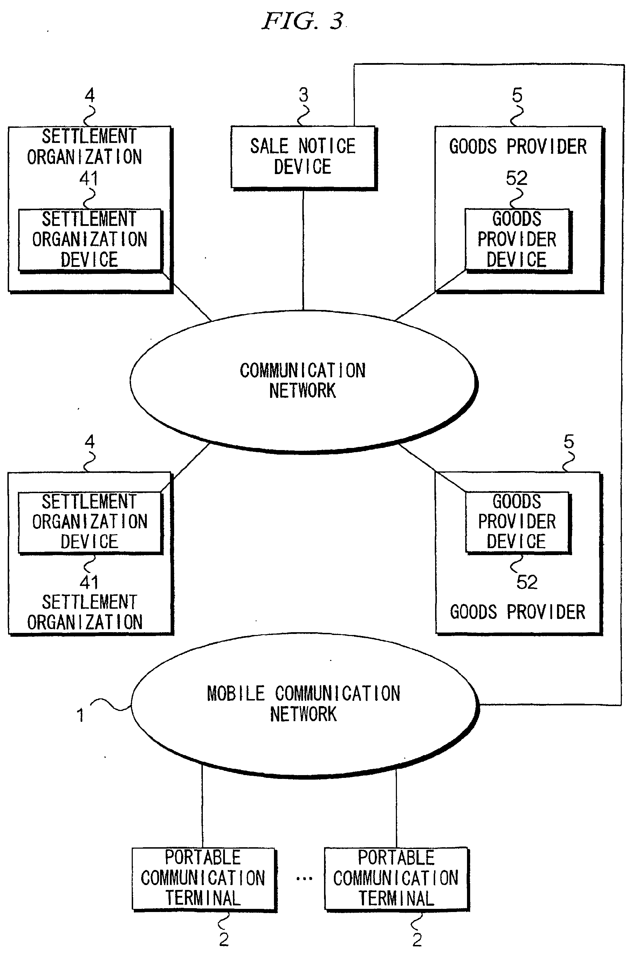

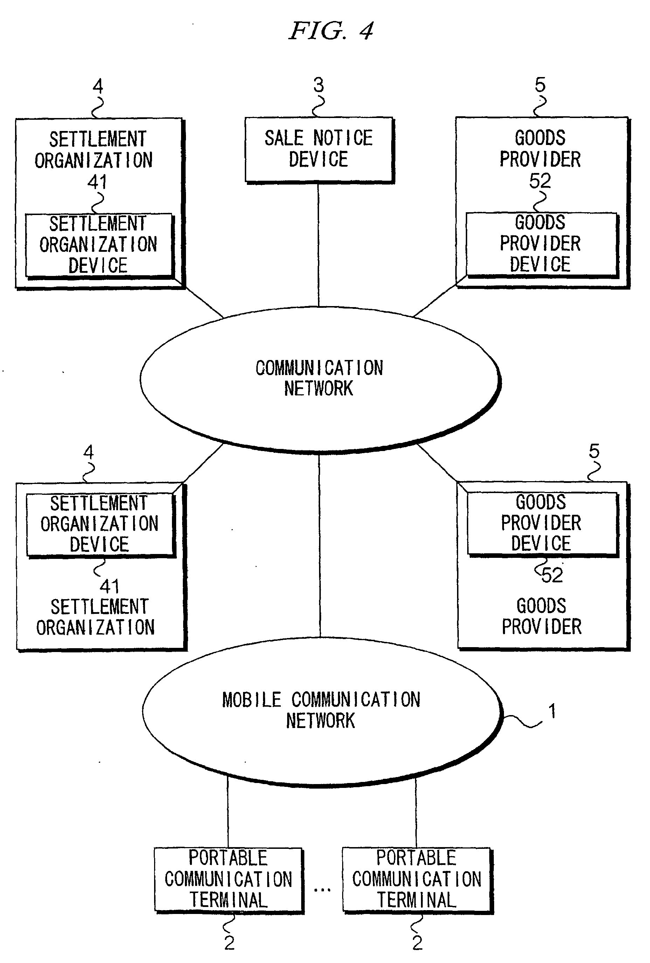

As described the above configuration, a leased line is used as a channel between the sale notice device 3 and the settlement organization device 41, the sale notice device 3 and the goods provider device 52, and the settlement organization device 41 and the goods provider device 52, the other communication medias may be used as well. For example, as shown in fig. 3, the sale notice device 3, the settlement organization device 41, and the goods sale company device 52 may be connected by which communication can take place mutually via internet, telephone network and so forth. Further, as shown in fig. 4, a communication network such as, internet, telephone network and so forth may be used as a channel between the sale notice device 3 and the mobile communication terminal 1. As described so far, an optional channel may be used as a channel for the notice device 3, the settlement organization device 41, the goods sale company device 52, and the mobile communication terminal 1.

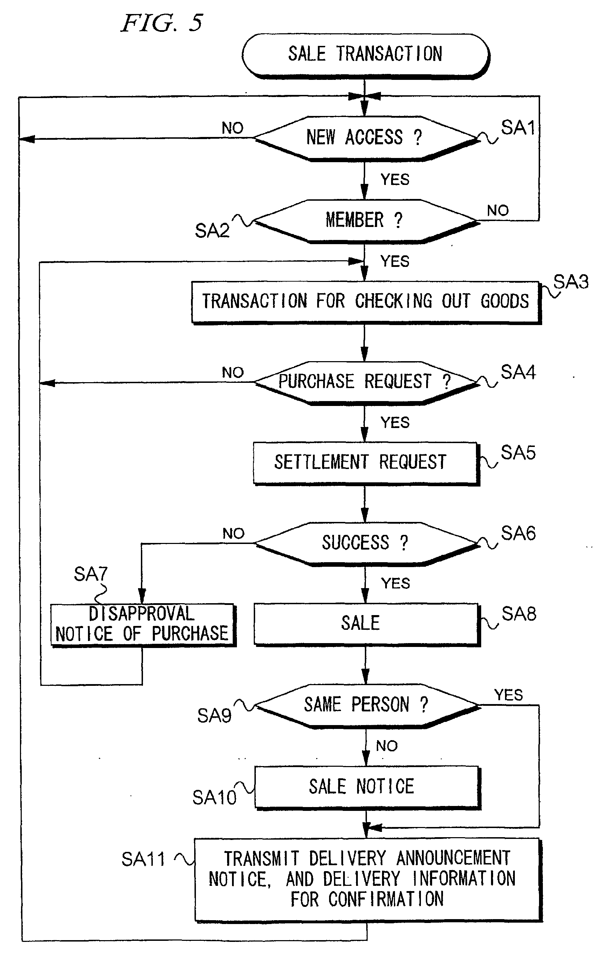

Fig 5 is a flowchart illustrating the flow of a sale transaction which the sale notice device 3 performs in this system. As shown in this figure, the sale notice device 3 monitors new access from the portable communication terminal 2 (SA1), and when new access is performed, the sale notice device 3 decides whether a user of the portable communication terminal 2 is a member or not (SA2). This decision is made by the sale notice device 3 whether the member described by personal information, transmitted from the portable communication terminal 2, is registered with the member database 31 or not. As a result of the above decision, when the access is performed from a member who is registered with the member database 31, the sale notice device 3 performs a transaction to offer a service (SA3~SA11) corresponding to the access, and continues observing new access from the portable communication terminal 2 (SA1). That is to say, the sale notice device 3 monitors new access, and performs a transaction to offer a service corresponding to a number of the menders who access the sale notice device 3 at the same time. It is to be noted that when access does not come from the member who is not registered with the member database 31, the sale notice device 3 will not perform a transaction to offer a service.

In a transaction to offer a service, the sale notice device 3 permits a user of portable communication terminal 2 to check out goods via the portable communication terminal 2 (SA3). When the sale notice device 3 receives a purchase request for delivery, and payment for the goods from the portable communication terminal 2 of the member who is permitted to check out the goods (SA4), it transmits a settlement request to the settlement organization device 41 in the settlement organization 4 which is available in the sale of the goods (SA5). In the above purchase request, the information to specify the goods and a person at a place of delivery (E.g.: name, address, and telephone number of a portable communication terminal used) is included. Also, in the above settlement request, the settlement information for the member, and the information showing a purchase price of the goods are included. Such information is obtained when the sale notice device 3 accesses the member database 31 and the goods database 32 .

It is also to be noted that the sale notice device 3 accesses the member database 31 and the goods database 32, and decides whether a settlement organization available by a member who tries to purchase the goods, and available in the sale of the goods, exists or not. And, if it does not exist, a purchase request for the goods from the portable communication terminal 2 of the member is not transmitted. Of course, the sale notice device 3 may be modified to check out whether a settlement organization, available by a member who tries to purchase the goods, and available in the sale of the goods, exists or not after receiving the purchase request. Also, there is only one settlement organization available to the user in this figure, but in reality there may be two or more. In this case, the settlement organization, available by the member who tries to purchase, and available in the sale of the goods, may be more than two, therefore, the sale notice device 3 should be modified that the member can select a settlement organization.

When a result of settlement transmitted from the settlement organization device 41, which has received a settlement request, shows disapproval of purchase (failure) (SA6), the sale notice device 3 transmits the information showing disapproval of the purchase, to the portable communication terminal 2 of the member (SA7). The status of the sale notice device 3 becomes the status to permit the member to check out the goods after showing this disapproval of the purchase.(SA3) When the result shows approval of the purchase (success) (SA6), the sale notice device 3 performs the sale of the goods (SA8). After the sale, the sale notice device 3 transmits the information (including the information to specify the goods, and the personal information for a person at a place of delivery) that the goods are sold, to sale of the goods company device 52.

Further, the sale notice device 3 decides that the member, and a person at a place of delivery are one and the same, (SA9). If not, the sale notice device 3 will transmit the sale notice (the information showing the sale date and time, the appointed date of delivery, price, payment method, and the place of delivery) to the portable communication terminal 2 of the member (SA10), and transmits a delivery announcement notice [including the information showing a user is the member (name, telephone number and so forth), the sale date and time, the appointed date of delivery, and the goods] along with delivery information for confirmation [including the goods information, the information describing a person at a place of delivery (name, address, and telephone number of the portable communication terminal), and a return address is the portable communication terminal 2 of the member], to the portable communication terminal 2 which a person at a place of delivery uses (SA11). On the contrary, if they are the same person, the sale notice device 3 transmits the above sale notice to the portable communication terminal 2 of the member, and will not transmit the delivery announcement notice, and the delivery information for confirmation. The decision as to whether they are the same person or not is made by comparing the personal information of the member with the personal information of a person at a place of delivery. For example, if the name and the telephone number are the same, it is decided that they are the same person, otherwise they are not seen as the same person.

A transaction to offer a service to the member is finished by the above. Of course, this is just one example, and it is also possible that the status of the sale notice device 3 becomes the status to permit the member to check out the goods from the beginning.

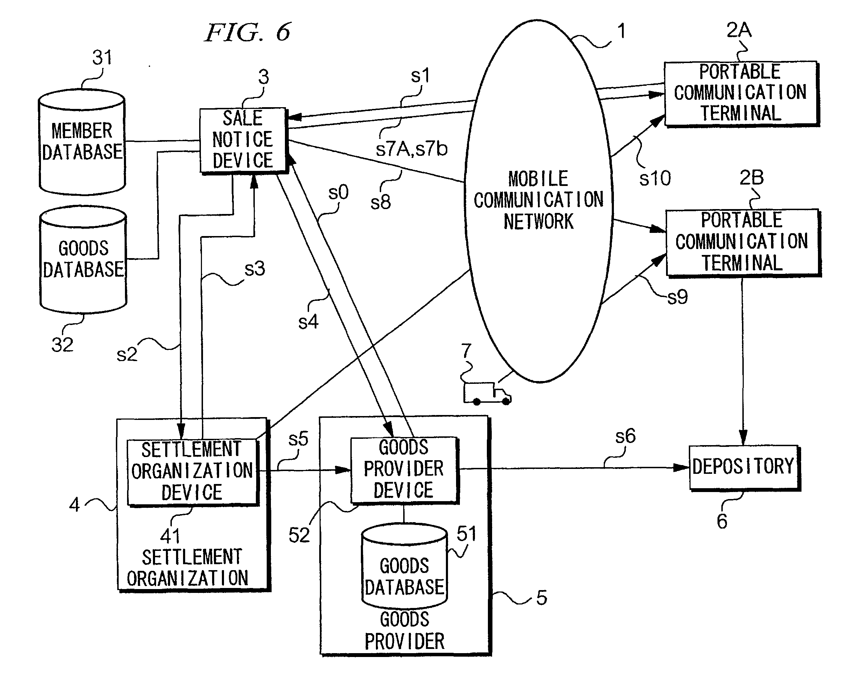

Next, a concrete example with regard to a notice of the sale system will be described with reference to figs. 6-9. In these figures, a portable communication terminal 2A, and a portable communication terminal 2B are each the portable communication terminal 2, but since a user for each of the terminals is different, each of the terminals has a different code attached to it. In this case, a user of the portable communication terminal 2A (hereafter referred to as user A) asks the goods provider 5 to pass the goods, purchased in on-line sale, to a person at a place of delivery. And, it is assumed that user A is registered with the member database 31 in advance. Also, it is assumed that the number of the settlement organization 4 is one, and the goods provider 5 is also one in this case.

Firstly, the user A operates the portable communication terminal 2A, accesses the sale notice device 3 via the mobile communication terminal 1, and starts an on-line sale after completion of authentication transaction based on the member database 31. Next, a purchase request for purchasing the goods, a delivery, and payment for the goods is transmitted to the sale notice device 3 from the portable communication terminal 2A at the end (s1). The information which specifies the goods, and the personal information which specifies a person at a place of delivery (E.g.: name, address, and telephone number of the portable communication terminal which the user B owns) are included in the purchase request. The settlement information of user A from the member database 31 is obtained, and by utilizing the goods database 32 the purchase price is determined in the sale notice device 3, which has received the purchase request. Then, the settlement request including the settlement information, and the purchase price, is transmitted to the settlement organization device 41(s2). This settlement request is received by the settlement organization device 41. A operation after this point will be described on a case-by-case basis.

### (A) Attempt to purchase goods with a credit card of user A which is not approved.

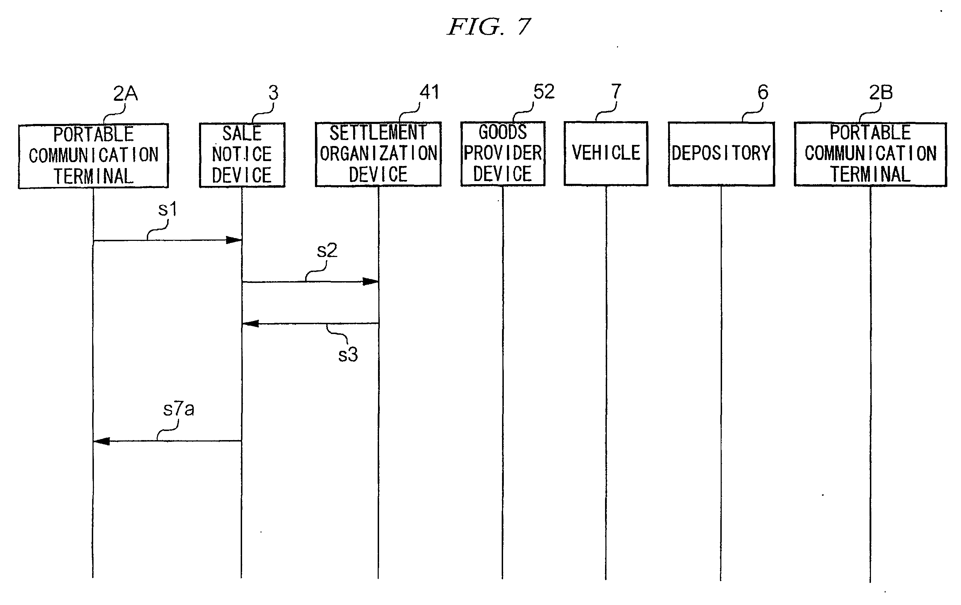

When the user A attempts to purchase the goods with a credit card that is not approved, as shown in fig. 7, a settlement result showing disapproval of settlement is transmitted from the settlement organization device 41 to the sale notice device 3 (s3), and the information showing disapproval of purchase is transmitted from the sale notice device 3 to the portable communication terminal 2A (s7a). Therefore, the user A is aware that the goods have not been purchased.

### (B) Attempt to purchase goods with a credit card of user A which is approved.

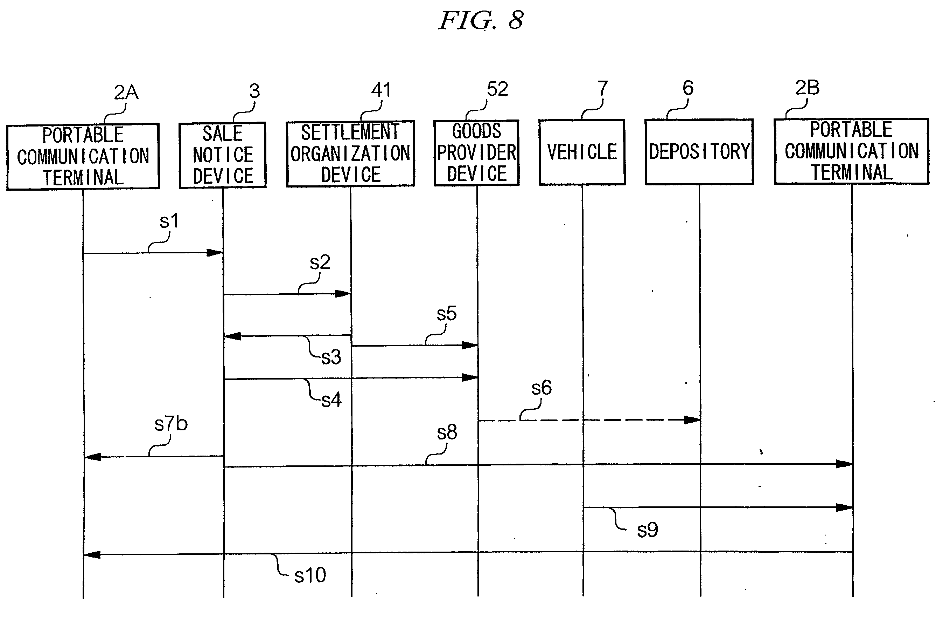

On the other hand, when the user A attempts to purchase with an approved credit card, as shown in fig. 8, a settlement result, showing that settlement has succeeded, is transmitted from the settlement organization device 41 to the sale notice device 3 (s3), and the information, (including the information to specify the goods and the personal information for a person at a place of delivery) showing that the goods have been sold, is notified from the sale notice device 3 to the goods provider device 52 (s4). As the information showing the details of settlement is notified from the settlement organization device 41 to the goods provider device 52 (s5), the goods provider device 52 announces the depository 6 near the address of a person at a place of delivery that the goods are going to be delivered (s6). This announcement may be performed between a worker of the goods provider 5 and a person at depository 6 by telephone or facsimile, or between the goods provider device 52 and a communication device at the depository 6 by data communication. In any case, identification information identifying the delivered goods is notified from the goods provider 5 to the depository 6.

Next, it is assumed that a person at a place of delivery is a user of portable communication terminal 2B (hereafter referred to as user B) in the following description.

The sale notice device 3 transmits a sale notice (including the sale date and time, the appointed date of delivery, the price, the payment method, and the place of delivery) to the portable communication terminal 2A via the mobile communication network 1 (s7b), and transmits a delivery announcement notice (including the information describing user A (such as name, telephone number and so forth), the sale date and time, the appointed date of delivery, and the goods information) along with delivery information for confirmation (including the goods and user B information (name and address), and the information describing a return address is portable communication terminal 2A) to the portable communication terminal 2B via the communication network 1.(s8) Therefore, the user B knows that the user A has purchased the goods, and that they will be delivered to the user B. Also, the user B can contact the user A easily as the delivery announcement notice includes the telephone number of user A.

When the goods are sent from the goods provider 5, receipt information for receiving the goods is transmitted from the vehicle 7 carrying the goods, to the portable communication terminal 2B.(s9) This receipt information includes the identification number, a place of delivery for the goods (depository 6) along with the date and time information for receiving the goods. Therefore, the user B is aware of the place of delivery for the goods, and the date and time for delivery.

The user B of the mobile communication terminal 2B goes to the depository 6 after the date and time for delivery; and operates the mobile communication terminal 2B to display the receipt information, shows it to a person at the depository 6. In this way, the user B is able to collect the goods received. In addition, the person at the depository 6 is able to receive and pass the goods by comparing the identification information from the goods provider 5 with that attached to the goods. Also, the person at the depository 6 is aware that the goods have not been delivered and that the wrong goods have been delivered, by comparing the identification information described above.

When the user B, who has received the goods, operates the mobile communication terminal 2B, the delivery information for confirmation received by the user B, corresponding to the goods, is transmitted to the mobile communication network 1. The return address for the delivery information for confirmation is the mobile communication terminal 2A, and it will therefore be forwarded to the mobile communication terminal 2A.(s10) In this way, the user A knows that the user B has received the goods, since the delivery information for confirmation is transmitted to the mobile communication terminal 2A. The delivery information for confirmation includes the telephone number of the mobile communication terminal 2B, therefore, the user A can contact the user B at any time.

### (C) A place of delivery is user A

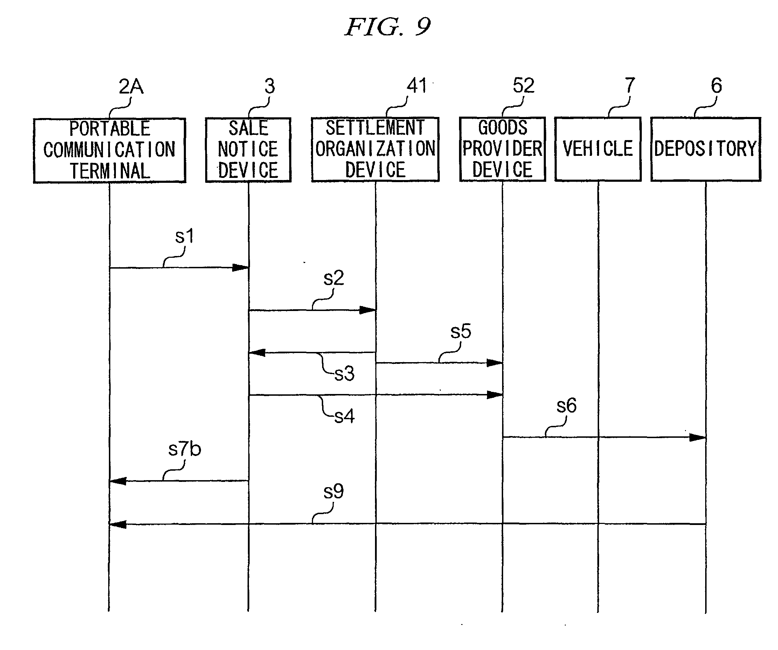

In this embodiment, a place of delivery can correspond to that of user A. In other words, a user for the place of delivery is the same as that of a purchaser of goods. In this case, as shown in fig. 9, a delivery announcement notice and delivery information for confirmation are not transmitted (s8 in fig. 8). This is because the mobile communication terminal 2A has already received the sale notice including all of the necessary information; and there is therefore no need to retransmit the delivery information for confirmation to the mobile communication terminal 2A. Accordingly, the delivery information for confirmation will not be forwarded from the mobile communication terminal of user A (s10 in fig. 8), who has received the goods.

### <Modifications>

The goods in the goods provider 5 may be sold by modifying the system of the present invention described above, and installing the sale notice device 3 into the goods provider 5. In this case, the goods database 51 may be used as the goods database 32. Also, the sale notice device 3 may be installed into the settlement organization 4, or, the goods provider 5 and the settlement organization 4 may be the same organization. Also, the goods provider 5 may comprise multiple goods databases 51. That is to say, a relationship of the sale notice device 3, the member base 31, the goods data base 32, the settlement organization 4, the settlement organization device 41, the goods provider 5, the goods data base 51, and the goods provider device 52 may be modified under any circumstances.

Also, in the system of the present invention in the case that the goods are delivered to the depository 6, the goods may be delivered to the home or the office of user B. Further, the user A may select the depository 6, or the home of user A, or the office of user A as a place of delivery. Or, the user B, who has received a delivery announcement notice, may instruct the goods provider 5 to change the place of delivery.

Further, a user's name may be searched or obtained from a telephone number by utilizing a telephone directory function in the portable communication terminal 2. In this embodiment, the system gets less time-consuming and complicated as the name is excluded from the delivery announcement notice, and the delivery information for confirmation. The name cannot be obtained if the telephone number is not registered with the telephone directory, but the person can be specified by making a call to the telephone number. That is to say, in this case, the name is not required information..

URL (Universal Resource Locator) may be adopted as the information for describing goods. That is to say, the goods information may be obtained by utilizing URL at a place of delivery. As a result, the system is made less time-consuming and less complicated. Also, in the case that a portable communication terminal comprising a web browser is used as a portable communication 2, a task for obtaining the goods information based on URL also becomes less time-consuming and less complicated.

Further, a portable communication terminal 2 may be modified to check an appointed date of delivery for goods by utilizing a real-time clock provided in the portable communication terminal 2. For example, the portable communication terminal 2 of a recipient for the goods may notify a purchaser by transmitting a warning that the goods have not been delivered once an appointed date of delivery has passed; or may transmit the warning to a sender of the goods. The portable communication terminal 2 of a sender may, of course, also be subject to the transaction described above.

In addition, the sender for the goods may perform a transaction corresponding to receiving an appointed date of delivery and delivery information for confirmation. For example, a warning may be transmitted to the sender with regard to the goods whose their delivery information for confirmation is not forwarded after the appointed date of delivery.

Also, delivery information may be reported to a mobile communication terminal 2 of a sender for goods from a delivery channel, such as a depository, a vehicle, and so forth. Further, in this case, a transaction corresponding to reporting delivery information, and forwarding delivery information for confirmation may be performed in the mobile communication terminal 2 of a sender. For example, when the delivery information for confirmation is not forwarded even though the goods are delivered in the delivery information, such a fact will be notified to the sender.

Also, a tag, recording an identification number, may be attached to goods sent from a vehicle 7. In this case, the information recorded on the tag may be forwarded to a mobile communication terminal 2B when the goods are given to a person at a place of delivery in a depository 6. In this embodiment, when the information recorded on the tag is received, the mobile communication terminal of a recipient of the goods may be modified to forward delivery information for confirmation automatically. In this way, reliability of confirmation of delivery is increased.

It is also optional to appoint a place of delivery. For example, the place of delivery for goods may be registered in advance, and the registered place of delivery may be appointed easily if a member purchases goods regularly and if goods are often delivered to a registered third person. The registered details for the place of delivery may be easily modified by the member, as desired.

Further, the present invention may be applied to a system to perform settlement based on a telephone number of portable communication terminal 2. In this case, the system may be modified to use a on-line sale service without registering as a member.

Also, a portable communication terminal is described as an example of a communication terminal in this embodiment, but, such a terminal is not restricted to the portable communication terminal if the communication terminal has a function to specify a user.

The present invention is not restricted to the above-described embodiment, and is defined further in the following claims.

## Claims

1. A method for sale and delivery of goods comprising:
a step of receiving a purchase request transmitted from a first communication terminal for specifying a user; and
a step of selling goods based on said purchase request, and transmitting information corresponding to said purchase request, to a second communication terminal for specifying a user.

2. A method for sale and delivery of goods according to Claim 1,
wherein said second communication terminal is a communication terminal corresponding to a place of delivery for said goods.

3. A method of sale and delivery of goods according to Claim 2,
wherein information corresponding to said purchase request includes said goods information.

4. A method for sale and delivery of goods according to Claim 3,
wherein said information is the one stating where said goods information is.

5. A method for sale and delivery of goods according to Claim 2,
wherein information corresponding to said purchase request includes information showing a user of said first communication terminal.

6. A method for sale and delivery of goods according to Claim 5,
wherein information for showing said user, is a telephone number for said first communication terminal.

7. A method for sale and delivery of goods according to Claim 6,
wherein said first communication terminal and said second communication terminal comprise a function whereby users of each communication terminal are able to communicate with each other.

8. A method for sale and delivery of goods according to Claim 2,
wherein information corresponding to said purchase request includes delivery information for confirmation of said goods; and
wherein said second communication terminal transmits said delivery information for confirmation to said first communication terminal following delivery of said goods.

9. A method for sale and delivery of goods according to Claim 2,
wherein information corresponding to said purchase request includes a delivery date for said goods.

10. A method for sale and delivery of goods according to Claim 2,
wherein delivery information for said goods is notified to said first communication terminal.

11. A method for sale and delivery of goods according to Claims 1-10,
wherein said communication terminal is a portable communication terminal.

12. A device for sale and delivery of goods comprising:
a means for receiving a purchase request transmitted from a first communication terminal for specifying a user;
a means for selling goods based on said purchase request; and
a means for transmitting information corresponding to said purchase request, to a second communication terminal for specifying a user.
